(19) Europäisches Patentamt / European Patent Office / Office européen des brevets

(11) **EP 3 355 461 A1**

(12) **DEMANDE DE BREVET EUROPEEN**

(43) Date de publication:
01.08.2018 Bulletin 2018/31

(51) Int Cl.:
*H02N 1/08* (2006.01)    *H02K 7/12* (2006.01)
*F03D 9/20* (2016.01)

(21) Numéro de dépôt: **18153766.3**

(22) Date de dépôt: **26.01.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD TN**

(30) Priorité: **26.01.2017 FR 1750647**

(71) Demandeur: **Commissariat à l'Energie Atomique et aux Energies Alternatives
75015 Paris (FR)**

(72) Inventeurs:
• **Perez, Matthias**
 **38000 Grenoble (FR)**
• **Boisseau, Sébastien**
 **38130 Echirolles (FR)**
• **Geisler, Matthias**
 **38000 Grenoble (FR)**

(74) Mandataire: **Talbot, Alexandre
 Cabinet Hecké
 28 Cours Jean Jaurès
 38000 Grenoble (FR)**

(54) **CONVERTISSEUR D'ÉNERGIE ÉLECTROSTATIQUE**

(57)    Un convertisseur électrostatique comporte : un stator muni d'au moins une électrode (10) et un rotor (2) comprenant au moins une pale (3) munie de contre-électrode (30), les pales (3) étant portés par un arbre (20) et mobile en rotation autour de l'axe de rotation parallèle à l'axe d'écoulement de flux d'air.

Fig. 6

EP 3 355 461 A1

**Description**

**Domaine technique**

L'invention se rapporte au domaine technique des convertisseurs électrostatiques, de type turbine, micro-turbine, éolienne, micro-éolienne.

L'invention trouve notamment son application pour la récupération de l'énergie, dans les domaines de l'automobile, l'aéronautique et l'habitat.

**Etat de la technique antérieure**

Un convertisseur électrostatique connu de l'état de la technique, notamment du document DE 20 2012 009 612, comporte :

- un stator muni d'au moins une électrode ;
- un rotor comprenant au moins une pale munie d'une contre-électrode, la pale étant destinée à recevoir un flux d'air, la pale étant mobile en rotation relativement au stator autour d'un axe de rotation destiné à coïncider avec un axe d'écoulement du flux d'air ; la contre-électrode étant revêtue d'un matériau diélectrique adapté pour être polarisé ;

le stator et le rotor étant configurés pour autoriser un premier mouvement relatif en rotation entre l'électrode et la contre-électrode, autour de l'axe de rotation de la pale, de manière à générer un couple électrostatique lors d'un tour du rotor.

Un tel convertisseur électrostatique est de type turbine à vent, et forme un récupérateur d'énergie. La puissance cinétique du flux d'air est convertie en puissance mécanique puis en puissance électrique. Tout d'abord, la turbine convertit le flux d'air en un mouvement de rotation relatif entre le stator et le rotor. Puis le mouvement de rotation relatif génère un couple électrostatique, et par la-même induit des variations de capacité électrique entre la ou les électrodes du stator et la contre-électrode de la ou chaque pale lors d'un tour de rotor, ce qui permet d'induire une variation d'énergie électrostatique qui se traduit par l'apparition d'un courant électrique.

Un tel convertisseur électrostatique de l'état de la technique n'est pas entièrement satisfaisant dans la mesure où il ne peut récupérer de l'énergie que lorsque le flux d'air possède une vitesse d'écoulement supérieure à un seuil. Ainsi, les vitesses d'écoulement du fluide inférieures au seuil sont inexploitables.

Il est donc recherché un convertisseur électrostatique pouvant récupérer de l'énergie, y compris pour des vitesses d'écoulement faibles du flux d'air, c'est-à-dire inférieures à 50 m/s, préférentiellement inférieures à 10 m/s, plus préférentiellement inférieures à 5 m/s.

**Exposé de l'invention**

L'invention vise à remédier en tout ou partie aux inconvénients précités. A cet effet, l'invention a pour objet un convertisseur électrostatique, comportant :

- un stator muni d'au moins une électrode ;
- un rotor comprenant au moins une pale munie d'une contre-électrode, la pale étant destinée à recevoir un flux d'air, la pale étant mobile en rotation relativement au stator autour d'un axe de rotation destiné à coïncider avec un axe d'écoulement du flux d'air ;

l'électrode ou la contre-électrode étant revêtue d'un matériau diélectrique adapté pour être polarisé ; le stator et le rotor étant configurés pour autoriser un premier mouvement relatif en rotation entre l'électrode et la contre-électrode, autour de l'axe de rotation de la pale, de manière à générer un couple électrostatique;

remarquable en ce que le stator et le rotor sont configurés pour autoriser un deuxième mouvement relatif entre l'électrode et la contre-électrode de manière à modifier le couple électrostatique généré.

Ainsi, un tel convertisseur électrostatique selon l'invention permet, grâce à un tel deuxième mouvement relatif entre l'électrode et la contre-électrode, d'obtenir un couple électrostatique variable. Dans l'état de la technique, le couple électrostatique est constant, et déterminé par le premier mouvement relatif en rotation entre l'électrode et la contre-électrode, pour une polarisation donnée du matériau diélectrique. En particulier, un tel deuxième mouvement relatif permet d'envisager de diminuer le couple électrostatique lorsque la vitesse d'écoulement du flux d'air est faible afin de récupérer de l'énergie.

Le convertisseur électrostatique selon l'invention peut comporter une ou plusieurs des caractéristiques suivantes.

Selon une caractéristique de l'invention, la contre-électrode présente une projection orthogonale sur l'électrode pour une position donnée du rotor, la projection orthogonale possédant une aire ; le deuxième mouvement relatif entre l'électrode et la contre-électrode modifiant l'aire pour la position donnée du rotor.

Ainsi, un avantage procuré est de pouvoir augmenter (respectivement diminuer) le couple électrostatique en augmentant (respectivement diminuant) la surface capacitive. Autrement dit, pour une position donnée du rotor, le deuxième mouvement relatif entre l'électrode et la contre-électrode modifie la surface de recouvrement (au sens d'un recouvrement sans contact) de l'électrode et de la contre-électrode, ce qui permet de modifier le couple électrostatique généré.

Selon une caractéristique de l'invention, l'électrode et la contre-électrode sont espacées d'une certaine distance pour une position donnée du rotor ; le deuxième mouvement relatif entre l'électrode et la contre-électrode modifiant cette distance pour la position donnée du rotor.

Ainsi, un avantage procuré est de pouvoir augmenter (respectivement diminuer) le couple électrostatique en diminuant (respectivement augmentant) la distance entre l'électrode et la contre-électrode (appelée également entrefer). Autrement dit, pour une position donnée du rotor, le deuxième mouvement relatif entre l'électrode et la contre-électrode modifie l'entrefer, ce qui permet de modifier le couple électrostatique généré.

Selon une caractéristique de l'invention, le rotor comprend un arbre rotatif sur lequel est montée la pale, le flux d'air étant destiné à générer un couple mécanique optimal, noté $C_{meca}$, s'exerçant sur l'arbre rotatif ; le convertisseur électrostatique comportant un dispositif d'ajustement configuré pour ajuster le deuxième mouvement relatif entre l'électrode et la contre-électrode de sorte que le couple électrostatique modifié, noté $C_{elec}$, vérifie $0{,}85 \times C_{meca} \leq C_{elec} \leq C_{meca}$, préférentiellement $0{,}9 \times C_{meca} \leq C_{elec} \leq C_{meca}$, plus préférentiellement $C_{elec} = C_{meca}$.

Ainsi, un avantage procuré est de pouvoir optimiser la récupération d'énergie lorsque le couple électrostatique tend vers le couple mécanique, en particulier lorsque la vitesse d'écoulement du flux d'air est faible.

Selon une caractéristique de l'invention, le deuxième mouvement relatif entre l'électrode et la contre-électrode augmente le couple électrostatique généré; le dispositif d'ajustement étant agencé pour s'opposer audit deuxième mouvement relatif.

Ainsi, lorsque la vitesse d'écoulement du flux d'air augmente, provoquant alors le deuxième mouvement relatif, un avantage procuré est de pouvoir maintenir un couple électrostatique faible afin de récupérer de l'énergie en régime transitoire.

Selon une caractéristique de l'invention, le dispositif d'ajustement comporte un ressort agencé pour s'opposer au deuxième mouvement relatif.

Ainsi, un avantage procuré est la simplicité de réalisation d'un tel dispositif d'ajustement. En outre, le comportement linéaire du ressort convient tout particulièrement dans le cas où le deuxième mouvement relatif entre l'électrode et la contre-électrode modifie uniquement la surface de recouvrement (au sens d'un recouvrement sans contact) de l'électrode et de la contre-électrode.

Selon une caractéristique de l'invention, le dispositif d'ajustement comporte des premier et second aimants agencés respectivement sur le stator et sur le rotor, selon des polarités identiques se faisant face, pour s'opposer au deuxième mouvement relatif.

Ainsi, un avantage procuré est la simplicité de réalisation d'un tel dispositif d'ajustement. En outre, le comportement non-linéaire des premier et second aimants convient tout particulièrement dans le cas où le deuxième mouvement relatif entre l'électrode et la contre-électrode modifie à la fois :

- la surface de recouvrement (au sens d'un recouvrement sans contact) de l'électrode et de la contre-électrode, et
- la distance entre l'électrode et la contre-électrode, i.e. l'entrefer.

Selon une caractéristique de l'invention, la pale est montée mobile en translation relativement au stator, suivant un axe de translation parallèle à l'axe de rotation de la pale, de manière à autoriser le deuxième mouvement relatif entre l'électrode et la contre-électrode.

Selon une caractéristique de l'invention, l'électrode est montée pivotante relativement au stator, autour d'un axe de pivotement perpendiculaire à l'axe de rotation de la pale, de manière à autoriser le deuxième mouvement relatif entre l'électrode et la contre-électrode. Le pivotement de l'électrode est réalisé suivant une direction ayant tendance à éloigner une extrémité de l'électrode de l'au moins une pale du rotor.

Selon une caractéristique de l'invention, le convertisseur électrostatique comporte une butée agencée pour définir une position de fin de course du deuxième mouvement relatif entre l'électrode et la contre-électrode ; la butée étant agencée de sorte que l'électrode et la contre-électrode sont situées à distance l'une de l'autre dans la position de fin de course.

Ainsi, un avantage procuré est d'empêcher un contact ou un choc entre l'électrode et la contre-électrode qui conduit à des pertes énergétiques, voire à une dépolarisation du matériau diélectrique.

Selon une caractéristique de l'invention, le matériau diélectrique est un électret.

Ainsi, un avantage procuré est la possibilité de s'affranchir d'une alimentation électrique dédiée à la polarisation du matériau diélectrique, car un électret possède un état de polarisation quasi-permanent.

**Brève description des dessins**

D'autres caractéristiques et avantages apparaîtront dans l'exposé détaillé de différents modes de réalisation de l'invention, l'exposé étant assorti d'exemples et de références aux dessins joints.

Figure 1 est une vue schématique illustrant le principe de fonctionnement d'un convertisseur électrostatique.

Figure 2 est une vue schématique en coupe transversale d'un convertisseur électrostatique de l'état de la technique avec un couple électrostatique constant.

Figure 3 est une vue schématique en coupe longitudinale du convertisseur électrostatique illustré à la figure 2.

Figure 4 est une vue schématique en coupe longitudinale d'un convertisseur électrostatique selon l'invention, illustrant un premier mode de réalisation du deuxième mouvement relatif entre l'électrode et la contre-électrode.

Figure 5 est une vue schématique en coupe longitudinale d'un convertisseur électrostatique selon l'invention, illustrant un deuxième mode de réalisation du deuxième mouvement relatif entre l'électrode et la contre-électrode.

Figure 6 est une vue schématique en coupe longitudinale d'un convertisseur électrostatique selon l'invention, illustrant un troisième mode de réalisation du deuxième mouvement relatif entre l'électrode et la contre-électrode.

Figure 7 est une vue schématique en coupe longitudinale d'un convertisseur électrostatique selon l'invention, illustrant un premier mode de réalisation du dispositif d'ajustement du deuxième mouvement relatif, lorsque le deuxième mouvement relatif est réalisé selon le premier mode de réalisation (cf. Figure 4).

Figures 8 et 9 sont des vues schématiques en coupe longitudinale d'un convertisseur électrostatique selon l'invention, illustrant le premier mode de réalisation du dispositif d'ajustement du deuxième mouvement relatif, lorsque le deuxième mouvement relatif est réalisé selon le deuxième mode de réalisation (cf. Figure 5).

Figure 10 est une vue schématique en coupe longitudinale d'un convertisseur électrostatique selon l'invention, illustrant un deuxième mode de réalisation du dispositif d'ajustement du deuxième mouvement relatif, lorsque le deuxième mouvement relatif est réalisé selon le troisième mode de réalisation (cf. Figure 6).

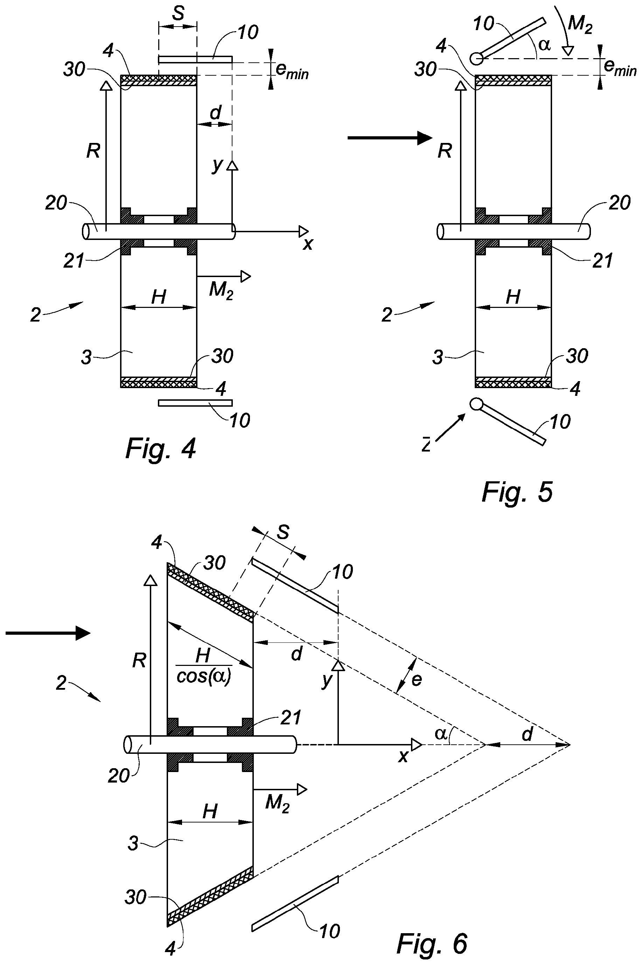

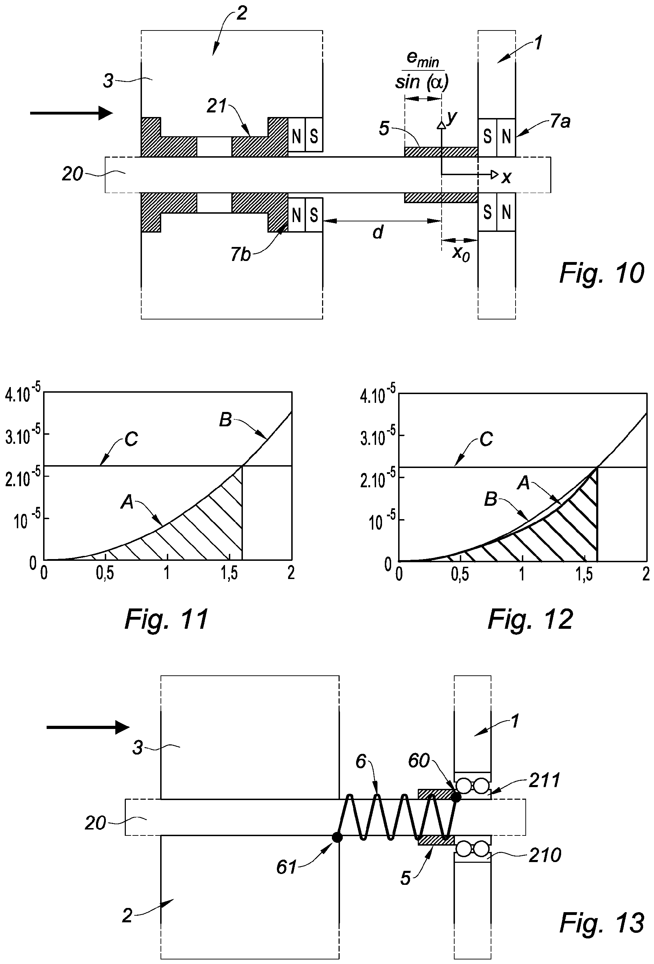

Figure 11 est un graphique illustrant l'évolution du couple électrostatique (courbe A, en N.m) généré par un convertisseur électrostatique selon l'invention (lorsque le deuxième mouvement relatif est réalisé selon le premier mode de réalisation, cf. Figure 4), en fonction de la vitesse d'écoulement du flux d'air (en m/s). Le couple mécanique (courbe B, en N.m) s'exerçant sur l'arbre rotatif, et généré par le flux d'air, est également représenté en fonction de la vitesse d'écoulement du flux d'air. Enfin, le couple électrostatique (courbe C, en N.m) généré par un convertisseur électrostatique de l'état de la technique est représenté en fonction de la vitesse d'écoulement du flux d'air. La partie hachurée illustre la zone de vitesse d'écoulement où l'extraction de l'énergie possible contrairement à la courbe C.

Figure 12 est un graphique illustrant l'évolution du couple électrostatique (courbe A, en N.m) généré par un convertisseur électrostatique selon l'invention (lorsque le deuxième mouvement relatif est réalisé selon le troisième mode de réalisation, cf. Figure 6), en fonction de la vitesse d'écoulement du flux d'air (en m/s). Le couple mécanique (courbe B, en N.m) s'exerçant sur l'arbre rotatif, et généré par le flux d'air, est également représenté en fonction de la vitesse d'écoulement du flux d'air. Enfin, le couple électrostatique (courbe C, en N.m) généré par un convertisseur électrostatique de l'état de la technique est représenté en fonction de la vitesse d'écoulement du flux d'air. La partie hachurée illustre la zone de vitesse d'écoulement où l'extraction de l'énergie possible contrairement à la courbe C.

Figure 13 est une vue schématique en coupe longitudinale d'un convertisseur électrostatique selon l'invention, illustrant un mode de réalisation où le rotor et l'arbre rotatif sont solidaires en rotation.

Figures 14 à 16 sont des vues schématiques en coupe longitudinale d'un convertisseur électrostatique selon l'invention, illustrant différents modes de réalisation où l'électrode et la contre-électrode sont déportées en aval du rotor, le rotor et l'arbre rotatif étant solidaires en rotation.

Par « longitudinale », on entend une coupe selon une direction s'étendant suivant l'axe de rotation (x) de la pale, ou suivant l'arbre rotatif du rotor.

Par « transversale », on entend une coupe selon une direction (y) perpendiculaire à l'axe de rotation (x) de la pale, ou encore perpendiculaire à l'arbre rotatif du rotor.

**Exposé détaillé des modes de réalisation**

Les éléments identiques ou assurant la même fonction porteront les mêmes références pour les différents modes de réalisation, par souci de simplification.

Un objet de l'invention est un convertisseur électrostatique, comportant :

- un stator 1 muni d'au moins une électrode 10 ;

- un rotor 2 comprenant au moins une pale 3 munie d'au moins une contre-électrode 30, la pale 3 étant destinée à recevoir un flux d'air, la pale 3 étant mobile en rotation relativement au stator 1 autour d'un axe de rotation x destiné à coïncider avec un axe d'écoulement du flux d'air ;

l'électrode 10 ou la contre-électrode 30 étant revêtue d'un matériau diélectrique 4 adapté pour être polarisé ; le stator 1 et le rotor 2 étant configurés pour autoriser un premier mouvement relatif $M_1$ en rotation entre l'électrode 10 et la contre-électrode 30, autour de l'axe de rotation x de la pale 3 et éventuellement de l'arbre rotatif 20, de manière à générer un couple électrostatique ;

le convertisseur électrostatique étant remarquable en ce que le stator 1 et le rotor 2 sont configurés pour autoriser un deuxième mouvement relatif $M_2$ entre l'électrode 10 et la contre-électrode 30 de manière à modifier le couple électrostatique généré.

### Premier mouvement relatif

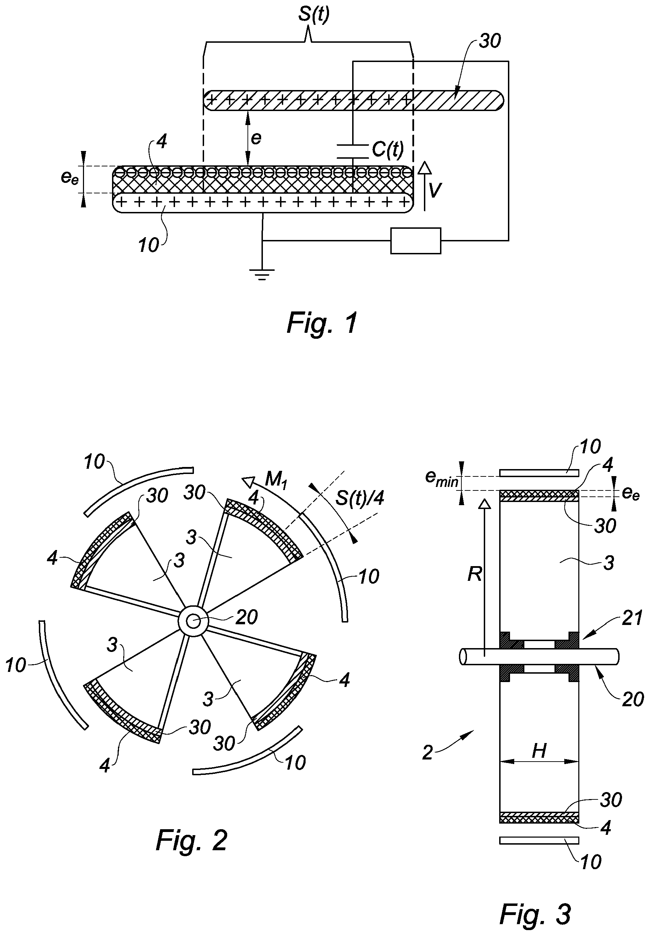

Comme illustré aux figures 1 et 2, le convertisseur électrostatique utilise une capacité électrique C(t) variable en fonction du temps t pour convertir une énergie mécanique de rotation en énergie électrique.

Pour ce faire, le matériau diélectrique 4 est polarisé. Le matériau diélectrique 4 est avantageusement un électret. L'électret est avantageusement sélectionné dans le groupe comportant un polytétrafluoroéthylène (PTFE) tel que le Téflon®, un copolymère de tétrafluoroéthylène et d'hexafluoropropylène (FEP), un empilement $SiO_2$-$Si_3N_4$, un polymère perfluoré amorphe tel que le Cytop®. Un électret est un diélectrique chargé électriquement, capable de conserver sa charge pendant des années. Un électret se comporte comme un dipôle électrique permanent. Toutefois, le matériau diélectrique 4 peut être polarisé avec une autre source de polarisation telle qu'un condensateur haute tension ou par triboélectricité. S'il n'est pas un électret, le matériau diélectrique 4 est avantageusement sélectionné dans le groupe comportant le polyfluorure de vinylidène (PVDF), un polyimide tel que le Kapton®, le polyméthacrylate de méthyle (PMMA), le nylon. Avantageusement, le matériau diélectrique 4 présente une épaisseur $e_e$ comprise entre 1 $\mu$m et 125 $\mu$m, de préférence comprise entre 25 $\mu$m et 100 $\mu$m.

Le premier mouvement relatif $M_1$ entre l'électrode 10 et la contre-électrode 30 engendre un déplacement du matériau diélectrique 4 polarisé et un déplacement de charges. Le convertisseur électrostatique transforme toute variation de géométrie, s'exprimant en variation de capacité électrique C(t), en électricité. La puissance électrique $P_{elec}$ du convertisseur diélectrique est directement proportionnelle :

- à la variation de capacité électrique ($C_{max}$-$C_{min}$) lors d'un tour de rotor 2,
- au carré de la tension V de polarisation du matériau diélectrique 4,
- à la vitesse de rotation $\omega$ du rotor 2,
- au nombre N d'électrodes 10 (chacune étant associée à une contre-électrode 30).

Une formule de la puissance électrique $P_{elec}$ peut être établie comme ci-après :

$$\begin{cases} C \approx \dfrac{S\varepsilon_0}{e} \text{ si } e_e \ll e \\ P_{elec} = \dfrac{1}{2}(C_{max} - C_{min}) \times N \times V^2 \times \omega \end{cases}$$

où :

- $\varepsilon_0$ est la permittivité du vide,
- $e_e$ est l'épaisseur du matériau diélectrique 4,
- e est la distance entre l'électrode 10 et la contre-électrode 30 (appelé également entrefer ou distance inter-électrodes),
- S est la moyenne, sur un tour de rotor 2, de la surface de recouvrement S(t) au sens d'un recouvrement sans contact- de l'électrode 10 et de la contre-électrode 30.

Le terme $\frac{1}{2}(C_{max} - C_{min}) \times N \times V^2$ a la dimension d'un couple électrostatique, noté $C_{elec}$. Dans l'état de la technique illustré à la figure 3, pour une position donnée du rotor 2, les paramètres géométriques (e, S) sont figés et ne permettent pas de générer un couple électrostatique variable.

En revanche, dans l'invention, le deuxième mouvement relatif $M_2$ entre l'électrode 10 et la contre-électrode 30 permet de modifier les paramètres géométriques (e, S) pour une position donnée du rotor 2, et par là-même le couple électrostatique généré, pour obtenir un couple électrostatique variable. La formule du couple électrostatique est la suivante :

$$C_{elec} = \frac{1}{2} \times \frac{S\varepsilon_0}{e} \times N \times V^2.$$

**Deuxième mouvement relatif : principe**

En notant R le rayon de la pale 3, et U la vitesse d'écoulement du flux d'air, on peut associer une vitesse spécifique $\lambda$, de la pale 3 selon la formule suivante :

$$\lambda = \frac{\omega R}{U}$$

Le rotor 2 subit une force de poussée T (pour « *thrust* » en langue anglaise) suivant la direction x de l'écoulement du flux d'air, et développe une puissance mécanique $P_{meca}$, dont les valeurs optimales (indice « opt ») peuvent être déterminées par les formules suivantes :

$$\begin{cases} T = T_{opt} = \dfrac{4}{9}\rho\pi R^2 U^2 \\ P_{meca} = P_{meca\_opt} = \dfrac{8}{27}\rho\pi R^2 U^3 \end{cases}$$

où $\rho$ est la masse volumique de l'air.

Le couple mécanique optimal $C_{meca\_opt}$ associé est donc égal à :

$$C_{meca\_opt} = \frac{P_{meca\_opt}}{\omega} = \frac{8}{27}\frac{\rho\pi R^3 U^2}{\lambda}$$

Le convertisseur électrostatique génère un couple électrostatique $C_{elec}$ s'opposant au couple mécanique s'exerçant sur le rotor 2. Idéalement, pour extraire un maximum d'énergie, la relation suivante doit être vérifiée pour optimiser le couple électrostatique :

$$C_{elec\_opt} = C_{meca\_opt}$$

Il vient une relation entre le couple électrostatique optimal et la force de poussée subie par le rotor 2 (notée équation [1]).

$$C_{elec\_opt}\left(T_{opt}\right) = \frac{2}{3}\frac{R}{\lambda}T_{opt}$$

**Equation [1]**

Le deuxième mouvement relatif $M_2$ entre l'électrode 10 et la contre-électrode 30 est donc adapté pour modifier le couplage électrostatique en fonction de la force de poussée subie par le rotor 2. Le deuxième mouvement relatif $M_2$ dépend donc de la vitesse d'écoulement du flux d'air.

**Deuxième mouvement relatif : recouvrement variable**

La contre-électrode 30 présente une projection orthogonale sur l'électrode 10 pour une position donnée du rotor 2, la projection orthogonale possédant une aire. Le stator 1 et le rotor 2 sont configurés de sorte que le deuxième mouvement relatif $M_2$ entre l'électrode 10 et la contre-électrode 30 modifie l'aire pour ladite position donnée du rotor 2.

La projection orthogonale peut être assimilée à une projection radiale.

Comme illustré à la figure 4, la pale 3 est montée mobile en translation relativement au stator 1, suivant un axe de translation parallèle à l'axe de rotation x qui peut être l'arbre rotatif 20, de manière à autoriser le deuxième mouvement relatif $M_2$ entre l'électrode 10 et la contre-électrode 30. L'électrode 10 et la contre-électrode 30 présentent une distance constante $e_{min}$ pour une position donnée du rotor 2. Bien entendu, la distance $e_{min}$ n'est pas rigoureusement constante en tenant compte de la précision de fabrication des pièces ou de l'éventuelle décharge du matériau diélectrique 4 sur la contre-électrode 30. En revanche, la surface de recouvrement S (au sens d'un recouvrement sans contact) de l'électrode 10 et de la contre-électrode 30 varie pour ladite position donnée du rotor 2. Comme illustré à la figure 4, l'écoulement du flux d'air tend à déplacer en translation la pale 3 suivant l'axe de translation, et produit le deuxième mouvement relatif $M_2$. Pour une position donnée du rotor 2, le deuxième mouvement relatif $M_2$ entre l'électrode 10 et la contre-électrode 30 est donc un mouvement de translation. Il résulte alors de l'écoulement du flux l'air que la surface de recouvrement S augmente entre l'électrode 10 et la contre-électrode 30. Dans l'exemple illustré, le flux d'air matérialisé par une flèche peut circuler de gauche à droite entraînant les pales 3 en direction du stator 1.

Le couple électrostatique vérifie alors la relation suivante :

$$C_{elec} = \frac{1}{2} \times \frac{\pi R(H-d) \times \varepsilon_0}{e_{min}} \times N \times V^2$$

où :

- d est le déplacement de la pale 3 suivant l'axe de translation,
- H est la dimension longitudinale suivant x de la pale 3.

A partir de l'équation [1], il est possible de déterminer le déplacement d idéal de la pale 3 suivant l'axe de translation afin d'extraire un maximum d'énergie.

$$d(T) = H - \frac{4 \times T_{opt} \times e_{min}}{3\pi \times \lambda \times \varepsilon_0 \times N \times V^2}$$

Le tableau ci-après rassemble les valeurs de différents paramètres entre un état initial où le couplage électrostatique est nul, et un état final où le couplage électrostatique est maximal.

| | Etat initial | Etat final |
|---|---|---|
| Surface de recouvrement **S** | 0 | $\pi R(H-d)$ |
| Distance inter-électrodes **e** | $e_{min}$ | $e_{min}$ |
| Déplacement **d** | H | 0 |
| Couplage électrique $C_{elec}$ | 0 | $\frac{1}{2} \times \frac{\pi R H \times \varepsilon_0}{e} \times N \times V^2$ |

**Deuxième mouvement relatif : recouvrement et entrefer variables**

La contre-électrode 30 présente une projection orthogonale sur l'électrode 10 pour une position donnée du rotor 2, la projection orthogonale possédant une aire. L'électrode 10 et la contre-électrode 30 présentent une distance e pour une position donnée du rotor 2. Le stator 1 et le rotor 2 sont configurés de sorte que le deuxième mouvement relatif $M_2$ entre l'électrode 10 et la contre-électrode 30 modifie :

- l'aire pour ladite position donnée du rotor 2,
- et la distance e pour ladite position donnée du rotor 2.

Comme illustré à la figure 6, la pale 3 est montée mobile en translation relativement au stator 1, suivant un axe de translation parallèle à l'axe de rotation x de la pale 3 et éventuellement de l'arbre rotatif 20, de manière à autoriser le deuxième mouvement relatif entre l'électrode 10 et la contre-électrode. Pour ladite position donnée du rotor 2, la contre-électrode 30 s'étend suivant une direction longitudinale (notée première direction) définissant un angle α avec l'axe x de rotation de la pale 3 et éventuellement de l'arbre rotatif 20. Pour ladite position donnée, l'électrode 10 s'étend suivant une direction longitudinale parallèle à la première direction. Selon une forme d'exécution possible, le stator 1 et le rotor 2 sont de forme conique.

Comme illustré à la figure 6, l'écoulement du flux d'air tend à déplacer en translation la pale 3 suivant l'axe de translation, et produit le deuxième mouvement relatif $M_2$. Par exemple, pour un flux d'air dirigé de gauche à droite sur l'exemple illustré, le rotor se déplace en direction du stator 1. Pour une position donnée du rotor 2, le deuxième mouvement relatif $M_2$ entre l'électrode 10 et la contre-électrode 30 est donc un mouvement de translation. Il résulte alors de l'écoulement du flux d'air que :

- la surface de recouvrement S augmente entre l'électrode 10 et la contre-électrode 30,
- l'entrefer entre l'électrode 10 et la contre-électrode 30 diminue.

Le couple électrostatique vérifie alors la relation suivante :

$$C_{elec} = \frac{1}{2} \times \frac{\pi R \left( \frac{H}{\cos(\alpha)} - d \times \cos(\alpha) \right) \times \varepsilon_0}{d \times \sin(\alpha)} \times N \times V^2$$

où :

- d est le déplacement de la pale 3 suivant l'axe de translation,
- H est la dimension longitudinale de la pale 3 mesurée suivant l'axe de rotation x.

A partir de l'équation [1], il est possible de déterminer le déplacement d idéal de la pale 3 suivant l'axe de translation afin d'extraire un maximum d'énergie.

$$d(T) = \frac{H}{\cos^2(\alpha)} \times \frac{1}{\left( 1 + \frac{4 \tan(\alpha) \times T_{opt}}{3\pi \times \lambda \times \varepsilon_0 \times N \times V^2} \right)}$$

Le tableau ci-après rassemble les valeurs de différents paramètres entre un état initial où le couplage électrostatique est nul, et un état final où le couplage électrostatique est maximal.

| | Etat initial | Etat final |
|---|---|---|
| Surface de recouvrement **S** | **0** | $\pi R \left( \frac{H}{\cos(\alpha)} - \frac{e_{min}}{\tan(\alpha)} \right)$ |
| Distance inter-électrodes **e** | **Hsin(α)** | $e_{min}$ |
| Déplacement **d** | $\frac{H}{\cos^2(\alpha)}$ | $\frac{e_{min}}{\sin(\alpha)}$ |
| Couplage électrique **C**$_{elec}$ | **0** | $\frac{1}{2} \times \frac{\pi R \left( \frac{H}{\cos(\alpha)} - \frac{e_{min}}{\tan(\alpha)} \right) \varepsilon_0}{e_{min}} \times N \times V^2$ |

**Deuxième mouvement relatif : entrefer variable**

L'électrode 10 et la contre-électrode 30 présentent une distance e pour une position donnée du rotor 2. Le stator 1 et le rotor 2 sont configurés de sorte que le deuxième mouvement relatif $M_2$ entre l'électrode 10 et la contre-électrode 30 modifie la distance e pour ladite position donnée du rotor 2.

Comme illustré à la figure 5, l'électrode 10 peut être montée pivotante relativement au stator 1, autour d'un axe de pivotement Z perpendiculaire à l'axe de rotation x de la pale 3 et éventuellement de l'arbre rotatif 20, de manière à autoriser le deuxième mouvement relatif M₂ entre l'électrode 10 et la contre-électrode 30. En revanche, la surface de recouvrement de l'électrode 10 et de la contre-électrode 30 demeure inchangée pour ladite position donnée du rotor 2.

Comme illustré à la figure 5, l'écoulement du flux d'air tend à faire pivoter la contre-électrode 30, et produit le deuxième mouvement relatif M₂. Pour une position donnée du rotor 2, le deuxième mouvement relatif M₂ entre l'électrode 10 et la contre-électrode 30 est donc un mouvement de rotation. Il résulte alors de l'écoulement du flux l'air que l'entrefer e entre l'électrode 10 et la contre-électrode 30 diminue. Par exemple avec un flux d'air orienté de gauche à droite, une partie de l'électrode 10 pivote pour se rapprocher de la contre-électrode 30.

Le couple électrostatique vérifie alors la relation suivante :

$$C_{elec} = \frac{1}{2} \times \frac{\pi R \times \ln\left(1 + \frac{H\sin(\alpha)}{e}\right) \times \varepsilon_0}{\alpha} \times N \times V^2$$

où :

- H est la dimension longitudinale de la pale 3 mesurée suivant l'axe de rotation x du rotor 2,
- α est l'angle formé entre l'électrode 10 et un axe parallèle à l'axe de rotation x du rotor 2 qui passe par l'axe de pivotement Z de l'électrode 10.

Le tableau ci-après rassemble les valeurs de différents paramètres entre un état initial où le couplage électrostatique est nul, et un état final où le couplage électrostatique est maximal.

| | Etat initial | Etat final |
|---|---|---|
| Surface de recouvrement **S** | $\pi \mathbf{RH}$ | $\pi\mathbf{RH}$ |
| Distance inter-électrodes **e** | $\infty$ | $\mathbf{e}_{min}$ |
| Rotation $\alpha$ | **90°** | **0°** |
| Couplage électrique **C**$_{elec}$ | **0** | $\dfrac{1}{2} \times \dfrac{\pi RH \times \varepsilon_0}{e_{min}} \times N \times V^2$ |

Ce mode de réalisation permet de générer un couplage électrostatique dépendant uniquement de la vitesse d'écoulement du flux d'air et des dimensions du stator 1, en s'affranchissant de l'effet de rotation du rotor 2.

### Rotor et stator

Le rotor 2 comporte un arbre rotatif 20 sur lequel est montée la pale 3. La pale 3 présente une extrémité distale relativement à l'axe de rotation x. La contre-électrode 30 est préférentiellement montée à l'extrémité distale de la pale 3.

Comme illustré aux figures 4 à 6 et 10, le rotor 2 peut comporter un palier 21 agencé pour recevoir l'arbre rotatif 20.

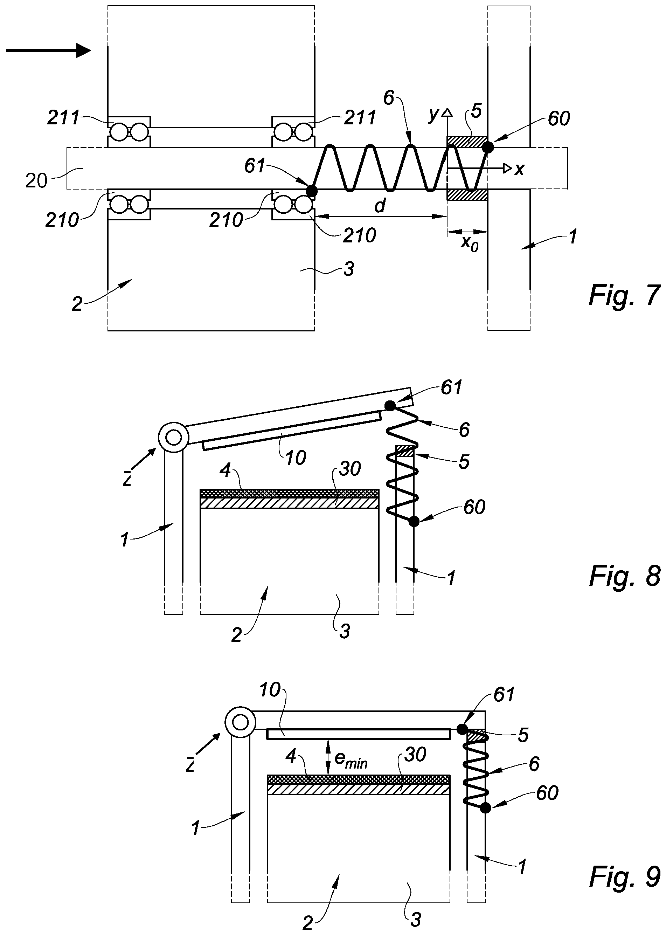

Comme illustré à la figure 7, le rotor 2 peut comporter un roulement à billes agencé pour recevoir l'arbre rotatif 20. Le roulement à billes comporte une partie fixe 210 et une partie mobile 211.

Comme illustré aux figures 13 à 16, le rotor 2 et l'arbre rotatif 20 peuvent être solidaires en rotation. Le stator 1 peut alors comporter un roulement à billes agencé pour recevoir l'arbre rotatif 20. Le roulement à billes comporte une partie fixe 210 et une partie mobile 211.

Comme illustré à la figure 2, le stator 1 peut comporter un ensemble d'électrodes 10 réparti, de préférence uniformément, autour de la trajectoire décrite par la pale 3 lors d'un tour de rotor 2.

Avantageusement, le rotor 2 comporte N$_p$ pales 3, N$_p$ étant un entier supérieur ou égal à 1, une contre-électrode 30 étant montée sur chaque pale 3. Le stator 1 comporte avantageusement un ensemble de N$_e$ électrodes, N$_e$ étant un entier vérifiant N$_e$=2N$_p$. Ainsi, une telle répartition est optimisée afin d'avoir un rapport N$_e$ x (C$_{max}$-C$_{min}$ maximum, où C$_{max}$ et C$_{min}$ sont respectivement la capacité électrique maximale et minimale obtenues lors d'un tour de rotor 2.

Avantageusement, le stator 1 comporte un circuit électrique dans lequel circule le courant induit, le circuit électrique étant connecté à au moins une électrode 10.

Ainsi, le fait de connecter le circuit électrique uniquement aux électrodes 10 du stator 1 (« *Slot-effect connection* » en langue anglaise), et non à la fois aux électrodes 10 du stator et aux contre-électrodes 30 du rotor 2 (« *Cross-wafer*

*connection* » en langue anglaise), est plus aisé à mettre en oeuvre.

## Ajustement du deuxième mouvement relatif

Le flux d'air est destiné à générer un couple mécanique, noté $C_{meca}$, s'exerçant sur l'arbre rotatif 20. Le convertisseur électrostatique comporte avantageusement des moyens d'ajustement, aussi appelés dispositif d'ajustement, configurés pour ajuster le deuxième mouvement relatif $M_2$ entre l'électrode 10 et la contre-électrode 30 de sorte que le couple électrostatique modifié, noté $C_{elec}$, vérifie $0,85 \times C_{meca} \leq C_{elec} \leq C_{meca}$, préférentiellement $0,9 \times C_{meca} \leq C_{elec} \leq C_{meca}$, plus préférentiellement $C_{elec} = C_{meca}$.

Lorsque le deuxième mouvement relatif $M_2$ entre l'électrode 10 et la contre-électrode 30 augmente le couple électrostatique généré, le dispositif d'ajustement est agencé pour s'opposer audit deuxième mouvement relatif $M_2$. Il existe une vitesse d'écoulement limite (notée $U_{lim}$) à partir de laquelle le couple mécanique optimal devient supérieur au couple électrostatique maximal (c'est-à-dire surface de recouvrement maximale et/ou entrefer minimal). La pale 3 ne doit plus se déplacer suivant l'axe de translation lorsque la vitesse d'écoulement du flux d'air atteint $U_{lim}$. A cet effet, le convertisseur électrostatique comporte une butée 5 agencée pour définir une position de fin de course du deuxième mouvement relatif $M_2$ entre l'électrode 10 et la contre-électrode 3. La butée 5 est agencée de sorte que l'électrode 10 et la contre-électrode 30 sont situées à distance l'une de l'autre dans la position de fin de course.

Dans le cas d'un deuxième mouvement relatif $M_2$ à recouvrement variable, la vitesse d'écoulement limite peut être déterminée de la manière suivante :

$$C_{meca}(U = U_{lim}) = C_{elec}(d = 0)$$

$$\Leftrightarrow \frac{8}{27} \frac{\rho \pi R^3 U_{lim}^2}{\lambda} = \frac{1}{2} \times \frac{\pi R H \varepsilon_0}{e_{min}} \times N \times V^2$$

$$\Leftrightarrow U_{lim} = \sqrt{\frac{27}{16} \times \frac{\lambda H \varepsilon_0}{\rho R^2 e_{min}} \times N \times V^2}$$

Idéalement, le dispositif d'ajustement est configuré pour exercer une force $F_{rep}$ s'opposant au deuxième mouvement relatif $M_2$, vérifiant la relation suivante :

$$F_{rep}(d) = T_{opt} = \frac{3\pi \times \lambda \times \varepsilon_0 \times N \times V^2}{4 \times e_{min}} (H - d)$$

Dans le cas d'un deuxième mouvement relatif $M_2$ à recouvrement et entrefer variables, la vitesse d'écoulement limite peut être déterminée de la manière suivante :

$$C_{meca}(U = U_{lim}) = C_{elec}\left(d = \frac{e_{min}}{\sin(\alpha)}\right)$$

$$\Leftrightarrow \frac{8}{27} \frac{\rho \pi R^3 U_{lim}^2}{\lambda} = \frac{1}{2} \times \frac{\pi R \left(\frac{H}{\cos(\alpha)} - \frac{e_{min}}{\tan(\alpha)}\right) \varepsilon_0}{e_{min}} \times N \times V^2$$

$$\Leftrightarrow U_{lim} = \sqrt{\frac{27}{16} \times \frac{\lambda \left(\frac{H}{\cos(\alpha)} - \frac{e_{min}}{\tan(\alpha)}\right) \varepsilon_0}{\rho R^2 e_{min}} \times N \times V^2}$$

Idéalement, le dispositif d'ajustement est configuré pour exercer une force $F_{rep}$ s'opposant au deuxième mouvement relatif $M_2$, vérifiant la relation suivante :

$$F_{rep}(d) = T_{opt} = \frac{3\pi \times \lambda \times \varepsilon_0 \times N \times V^2}{4 \times \tan(\alpha)} \times \left(\frac{H}{d \times \cos^2(\alpha)} - 1\right)$$

Dans le cas d'un deuxième mouvement relatif $M_2$ à entrefer variable, la vitesse d'écoulement limite vérifie la relation suivante :

$$U_{lim} = \sqrt{\frac{27}{16} \times \frac{\lambda H \varepsilon_0}{\rho R^2 e_{min}} \times N \times V^2}$$

Comme illustré aux figures 7 à 9, le dispositif d'ajustement peut comporter un ressort 6 agencé pour s'opposer au deuxième mouvement relatif $M_2$. Le ressort 6 comporte avantageusement une première extrémité 60 montée fixe relativement au stator 1. Le ressort 6 comporte avantageusement une deuxième extrémité 61 montée mobile relativement au stator 1. Plus précisément, le rotor 2 peut comporter un roulement à billes agencé pour recevoir l'arbre rotatif 20. Le roulement à billes comporte une partie fixe 210 et une partie mobile 211. La deuxième extrémité 61 du ressort 6 est montée sur la partie fixe 210 du roulement à billes. Dans l'exemple illustré, le dispositif d'ajustement s'oppose au déplacement du rotor en direction du stator (ici de gauche à droite) causé par le flux d'air sur la pale 3.

Dans le mode de réalisation illustré à la figure 13, Le ressort 6 comporte une première extrémité 60 fixée à la partie mobile 211 du roulement à billes. Le ressort 6 comporte une deuxième extrémité 61 montée mobile relativement au stator 1.

Dans le cas d'un deuxième mouvement relatif $M_2$ à recouvrement variable, un ressort 6 mécanique linéaire est particulièrement bien adapté car la force $F_{rep}(d)$ est de type affine. Le ressort 6 est avantageusement configuré pour vérifier les relations suivantes :

$$\begin{cases} x_0 > 0 \\ l_0 = x_0 + H \\ F_{rep}(d = 0) = T(U_{lim}) = kH \end{cases}$$

où :

- $x_0$ est la position à l'origine du ressort 6,
- k est la raideur du ressort 6,
- $l_0$ est la longueur à vide du ressort 6.

La première équation permet de positionner correctement la deuxième extrémité 61 du ressort 6 afin que la position de fin de course de la butée 5 soit atteinte. La deuxième équation permet de disposer le rotor 2 relativement au stator 1 de sorte qu'aucune force ne s'exerce sur le convertisseur et que le couple électrostatique initial est nul. La troisième équation permet d'égaliser la force de poussée subie par le rotor 2 à la vitesse limite $U_{lim}$ avec la force du ressort 6 au moment du contact avec la butée 5, ce qui fixe la valeur k de la raideur du ressort 6.

Ainsi, comme illustré à la figure 11, un tel ressort 6 peut exercer une force $F_{rep}$ s'opposant au deuxième mouvement relatif $M_2$. Lorsque la vitesse d'écoulement du flux d'air est faible (inférieure à 1,5 m/s), le couple électrostatique modifié est sensiblement égal au couple mécanique s'exerçant sur le rotor 2 (graphiquement, la courbe A est sensiblement confondue avec la courbe B) et l'extraction d'énergie électrique est possible. Dans l'état de la technique, pour ces vitesses faibles, le couple électrostatique fixe est supérieur au couple mécanique s'exerçant sur le rotor 2 (graphiquement, la courbe C est au-dessus la courbe B) et l'extraction d'énergie électrique est impossible.

Dans le cas d'un deuxième mouvement relatif $M_2$ à recouvrement et entrefer variables, le ressort 6 est avantageusement configuré pour vérifier les relations suivantes :

$$\begin{cases} \dfrac{e_{min}}{\sin(\alpha)} < x_0 \\[2mm] x_0 + \dfrac{e_{min}}{\sin(\alpha)} < l_0 < x_0 + \dfrac{H}{\cos^2(\alpha)} \\[2mm] F_{rep}\left(d = \dfrac{e_{min}}{\sin(\alpha)}\right) = T(U_{lim}) = k\left(l_0 - \left(\dfrac{R}{\tan(\alpha)} - H + \dfrac{e_{min}}{\sin(\alpha)} - x_0\right)\right) \end{cases}$$

La première équation permet de positionner correctement la deuxième extrémité 61 du ressort 6 afin que la position de fin de course de la butée 5 soit atteinte. La deuxième équation permet de disposer le rotor 2 relativement au stator 1 de sorte qu'aucune force ne s'exerce sur le convertisseur (le couple électrostatique initial n'étant pas forcément nul). La troisième équation permet d'égaliser la force de poussée subie par le rotor 2 à la vitesse limite $U_{lim}$ avec la force du ressort 6 au moment du contact avec la butée 5, ce qui fixe la valeur k de la raideur du ressort 6.

Ainsi, un tel ressort 6 peut exercer une force $F_{rep}$ s'opposant au deuxième mouvement relatif $M_2$.

Comme illustré à la figure 10, le dispositif d'ajustement peut comporter des premier et second aimants 7a, 7b agencés respectivement sur le stator 1 et sur le rotor 2, selon des polarités N, S identiques se faisant face, pour s'opposer au deuxième mouvement relatif $M_2$. Les premier et second aimants 7a, 7b présentent des dimensions et des positions relatives adaptées pour exercer une force $F_{rep}$ s'opposant au deuxième mouvement relatif $M_2$.

Comme illustré à la figure 12, un tel dispositif d'ajustement peut exercer une force $F_{rep}$ s'opposant au deuxième mouvement relatif $M_2$. Lorsque la vitesse d'écoulement du flux d'air est faible (inférieure à 1,5 m/s), le couple électrostatique modifié est sensiblement égal au couple mécanique s'exerçant sur le rotor 2 (graphiquement, la courbe A est sensiblement confondue avec la courbe B) et l'extraction d'énergie électrique est possible. Dans l'état de la technique, pour ces vitesses faibles, le couple électrostatique fixe est supérieur au couple mécanique s'exerçant sur le rotor 2 (graphiquement, la courbe C est au-dessus la courbe B) et l'extraction d'énergie électrique est impossible.

**Electrode(s) et contre-électrode(s)**

Dans les modes de réalisation illustrés précédemment, la contre-électrode 30 est revêtue du matériau diélectrique 4. Cependant, selon une variante non illustrée, l'électrode 10 peut être revêtue du matériau diélectrique 4 tandis que la contre-électrode 30 possède une surface libre.

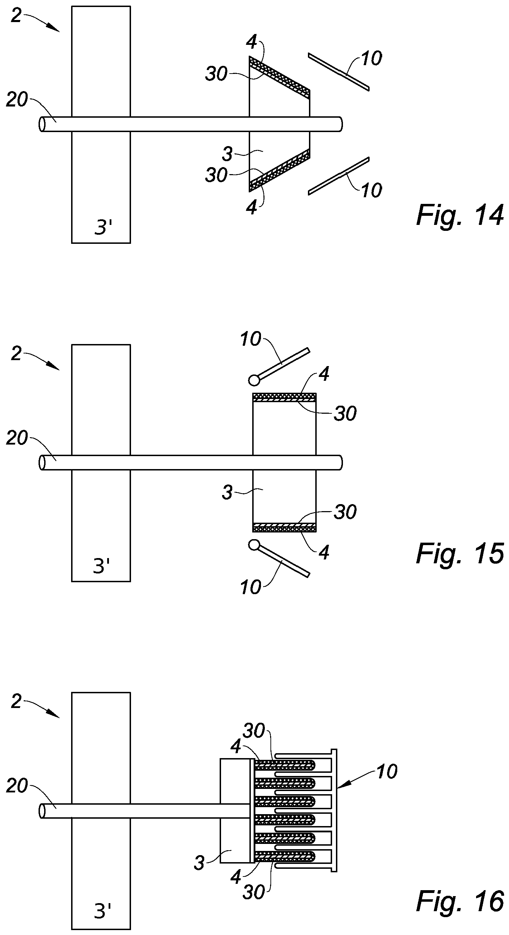

Comme illustré aux figures 14 à 16, l'électrode 10 et la contre-électrode 30 peuvent être déportées en aval du rotor 2, le rotor 2 et l'arbre rotatif 20 étant solidaires en rotation.

Comme illustré à la figure 16, le convertisseur électrostatique peut comporter un ensemble d'électrodes 10 et de contre-électrodes 30 interdigitées.

Dans un mode de réalisation qui peut être illustré aux figures 14, 15 et 16, le rotor peut comporter au moins une pale additionnelle 3' destinée à recevoir un flux d'air, la pale 3 étant mobile en rotation relativement au stator 1 autour d'un axe de rotation x destiné à coïncider avec un axe d'écoulement du flux d'air. Le flux d'air sur la pale 3' entraine la rotation du rotor 2. La pale 3' est disposée en amont et la pale 3 est disposée en aval. L'arbre rotatif 20 est fixé à la pale 3 et à la pale 3'. Comme pour les autres modes de réalisation, le stator 1 et le rotor 2 sont configurés pour autoriser un deuxième mouvement relatif $M_2$ entre l'au moins une électrode 10 et la contre-électrode 30 de manière à modifier le couple électrostatique généré $C_{elec}$, le deuxième mouvement relatif $M_2$ entre l'électrode 10 et la contre-électrode 30 étant destiné à être réalisé par le flux d'air.

Dans les différents modes de réalisation illustrés, le flux d'air cause le premier mouvement relatif $M_1$ ainsi que le deuxième mouvement relatif $M_2$.

L'invention ne se limite pas aux modes de réalisation exposés. L'homme du métier est mis à même de considérer leurs combinaisons techniquement opérantes, et de leur substituer des équivalents.

**Revendications**

1. Convertisseur électrostatique, comportant :

   - un stator (1) muni d'au moins une électrode (10) ;
   - un rotor (2) monté mobile en rotation par rapport au stator (1), le rotor (2) comprenant au moins une pale (3) munie d'une contre-électrode (30), l'au moins une électrode (10) ou la contre-électrode (30) étant revêtue d'un matériau diélectrique (4) adapté pour être polarisé, l'au moins une électrode (10), le matériau diélectrique (4) et la contre-électrode (30) définissant un condensateur dont la capacité électrique évolue, la pale (3) étant destinée à recevoir un flux d'air, la pale (3) étant mobile en rotation relativement au stator (1) autour d'un axe de rotation (x) destiné à coïncider avec un axe d'écoulement du flux d'air, le flux d'air causant la rotation de la au moins une pale (3) autour de l'axe de rotation (x);

le stator (1) et le rotor (2) étant configurés pour autoriser un premier mouvement relatif ($M_1$) en rotation entre l'électrode (10) et la contre-électrode (30), autour de l'axe de rotation (x), de manière à générer un couple électrostatique ;

**caractérisé en ce que** le stator (1) et le rotor (2) sont configurés pour autoriser un deuxième mouvement relatif ($M_2$) entre l'électrode (10) et la contre-électrode (30) de manière à modifier le couple électrostatique généré ($C_{elec}$), le flux d'air causant le deuxième mouvement relatif ($M_2$) entre l'électrode (10) et la contre-électrode (30).

2. Convertisseur électrostatique, comportant :

- un stator (1) muni d'au moins une électrode (10) ;
- un rotor (2) comprenant au moins une contre-électrode (30), le rotor (2) étant mobile en rotation relativement au stator (1) autour d'un axe de rotation (x); l'au moins une électrode (10) ou la contre-électrode (30) étant revêtue d'un matériau diélectrique (4) adapté pour être polarisé ;
- un arbre rotatif (20) comprenant une pale (3) destinée à recevoir un flux d'air, le flux d'air autorisant un premier mouvement relatif ($M_1$) en rotation entre l'au moins une électrode (10) et la contre-électrode (30) autour de l'axe de rotation (x) du rotor (2) de manière à générer un couple électrostatique ($C_{elec}$) ;

**caractérisé en ce que** le stator (1) et le rotor (2) sont configurés pour autoriser un deuxième mouvement relatif ($M_2$) entre l'au moins une électrode (10) et la contre-électrode (30) de manière à modifier le couple électrostatique généré ($C_{elec}$), le deuxième mouvement relatif ($M_2$) entre l'électrode (10) et la contre-électrode (30) étant destiné à être réalisé par le flux d'air.

3. Convertisseur électrostatique selon l'une des revendications précédentes, dans lequel le deuxième mouvement relatif ($M_2$) entre l'au moins une électrode (10) et la contre-électrode (30) comporte un pivotement de l'électrode (10) selon un axe (Z) perpendiculaire à l'axe de rotation (x).

4. Convertisseur électrostatique selon l'une des revendications précédentes, dans lequel le deuxième mouvement relatif ($M_2$) entre l'électrode (10) et la contre-électrode (30) comporte une translation du rotor (2) selon l'axe de rotation (x).

5. Convertisseur électrostatique selon l'une des quelconque des revendications précédentes, dans lequel une augmentation de la vitesse du flux d'air selon l'axe de rotation (x) entraine une augmentation du couple électrostatique généré ($C_{elec}$) jusqu'à atteindre une valeur seuil.

6. Convertisseur électrostatique selon l'une des revendications précédentes, comprenant un dispositif d'ajustement (6, 7a, 7b) agencé pour s'opposer audit deuxième mouvement relatif ($M_2$).

7. Convertisseur électrostatique selon la combinaison des revendications 5 et 6, dans lequel le deuxième mouvement relatif ($M_2$) entre l'électrode (10) et la contre-électrode (30) est configuré pour augmenter le couple électrostatique généré ($C_{elec}$) ; le dispositif d'ajustement (6 ; 7a, 7b) étant agencé pour s'opposer audit deuxième mouvement relatif ($M_2$) lors d'une augmentation de la vitesse du flux d'air selon l'axe de rotation (x).

8. Convertisseur électrostatique selon l'une des revendications 6 et 7, dans lequel le flux d'air étant destiné à générer un couple mécanique noté $C_{meca}$ s'exerçant sur le rotor (2); le dispositif d'ajustement (6 ; 7a, 7b) est configuré pour ajuster le deuxième mouvement relatif ($M_2$) entre l'électrode (10) et la contre-électrode (30) de sorte que le couple électrostatique modifié, noté $C_{elec}$, vérifie $0,85 \times C_{meca} \leq C_{elec} \leq C_{meca}$, préférentiellement $0,9 \times C_{meca} \leq C_{elec} \leq C_{meca}$, plus préférentiellement $C_{elec} = C_{meca}$.

9. Convertisseur électrostatique selon l'une des revendications 6 à 8, dans lequel le dispositif d'ajustement comporte un ressort (6) agencé pour s'opposer au deuxième mouvement relatif ($M_2$) lors d'une augmentation de la vitesse du flux d'air selon l'axe de rotation (x).

10. Convertisseur électrostatique selon l'une des revendications 6 à 8, dans lequel le dispositif d'ajustement comporte des premier et second aimants (7a, 7b) agencés respectivement sur le stator (1) et sur le rotor (2), selon des polarités

(N, S) identiques se faisant face, pour s'opposer au deuxième mouvement relatif (M$_2$) lors d'une augmentation de la vitesse de l'écoulement de l'air selon l'axe de rotation (x).

**11.** Convertisseur électrostatique selon l'une des revendications précédentes, dans lequel l'au moins une électrode (10) est montée pivotante relativement au stator (1), autour d'un axe de pivotement (Z) perpendiculaire à l'axe de rotation (x), de manière à autoriser le deuxième mouvement relatif (M$_2$) entre l'électrode (10) et la contre-électrode (30).

**12.** Convertisseur électrostatique selon l'une des revendications précédentes, comportant une butée (5) agencée pour définir une position de fin de course du deuxième mouvement relatif (M$_2$) entre l'au moins une électrode (10) et la contre-électrode (30) lors d'une augmentation de la vitesse du flux d'air selon l'axe de rotation (x) ; la butée (5) étant agencée de sorte que l'au moins une électrode (10) et la contre-électrode (30) sont situées à distance l'une de l'autre dans la position de fin de course.

**13.** Convertisseur électrostatique selon l'une des revendications précédentes, dans lequel le matériau diélectrique (4) est un électret.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Europäisches
Patentamt

European
Patent Office

Office européen
des brevets

**RAPPORT DE RECHERCHE EUROPEENNE**

Numéro de la demande

EP 18 15 3766

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | JP 2003 269319 A (TOSHIBA CORP) 25 septembre 2003 (2003-09-25) * abrégé; figures 1-8 * ----- | 1,2,4, 6-9,12 | INV. H02N1/08 H02K7/12 F03D9/20 |
| Y | DE 200 22 531 U1 (WENNINGER HERMANN [DE]) 28 février 2002 (2002-02-28) * le document en entier * ----- | 1,2,4, 6-9,12 | |
| Y | DE 20 2012 009612 U1 (WIEDEMANN ANDRE [DE]) 18 décembre 2012 (2012-12-18) * le document en entier * ----- | 1,2,10, 13 | |
| Y | JP 2012 044804 A (THK CO LTD) 1 mars 2012 (2012-03-01) | 1,2 | |
| A | * abrégé; figures 1-2 * ----- | 5-8 | |
| Y | WO 2009/052201 A1 (CALIFORNIA INST OF TECHN [US]; LO HSI-WEN [US]; TAI YU-CHONG [US]) 23 avril 2009 (2009-04-23) * le document en entier * ----- | 13 | |
| | | | DOMAINES TECHNIQUES RECHERCHES (IPC) |
| Y | DE 203 18 278 U1 (STROHMEIER STEFAN [DE]) 26 février 2004 (2004-02-26) | 10 | H02N H02K F03D |
| A | * alinéa [0009] - alinéa [0010]; figures 2-5 * ----- | 1,2,6-8 | |

Le présent rapport a été établi pour toutes les revendications

| Lieu de la recherche | Date d'achèvement de la recherche | Examinateur |
|---|---|---|
| Munich | 20 juin 2018 | von Rauch, Marianne |

**ANNEXE AU RAPPORT DE RECHERCHE EUROPEENNE
RELATIF A LA DEMANDE DE BREVET EUROPEEN NO.**

EP 18 15 3766

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-06-2018

| Document brevet cité au rapport de recherche | | Date de publication | Membre(s) de la famille de brevet(s) | | Date de publication |
|---|---|---|---|---|---|
| JP 2003269319 | A | 25-09-2003 | AUCUN | | |
| DE 20022531 | U1 | 28-02-2002 | AUCUN | | |
| DE 202012009612 | U1 | 18-12-2012 | AUCUN | | |
| JP 2012044804 | A | 01-03-2012 | AUCUN | | |
| WO 2009052201 | A1 | 23-04-2009 | US | 2009174281 A1 | 09-07-2009 |
| | | | WO | 2009052201 A1 | 23-04-2009 |
| DE 20318278 | U1 | 26-02-2004 | AUCUN | | |

EPO FORM P0460

Pour tout renseignement concernant cette annexe : voir Journal Officiel de l'Office européen des brevets, No.12/82

**EP 3 355 461 A1**

## RÉFÉRENCES CITÉES DANS LA DESCRIPTION

**Documents brevets cités dans la description**

- DE 202012009612